# EUROPÄISCHE PATENTSCHRIFT

(11) **EP 0 629 722 B1**
(45) Veröffentlichungstag und Bekanntmachung des Hinweises auf die Patenterteilung: **22.10.1997**
(21) Anmeldenummer: 94104990.0
(22) Anmeldetag: 29.03.1994
(51) Int. Cl.: D02G 1/12

(54) **Mehrfachbreiter Faserstreifen sowie ein Verfahren und eine Vorrichtung zu dessen Herstellung**
Fibrous strip comprising multiple widths and method and apparatus for the production thereof
Bande fibreuse comprenant des rubans multiples et procédé et dispositif pour la production

(30) Priorität: 18.06.1993 DE 4320303
(43) Veröffentlichungstag der Anmeldung: 21.12.1994
(73) Patentinhaber: RHONE-POULENC RHODIA AKTIENGESELLSCHAFT, 79108 Freiburg (DE)
(72) Erfinder: Dollhopf, Rüdiger, Dipl.-Ing., D-79336 Herbolzheim (DE); Raufer, Klaus, D-79291 Merdingen (DE)
(74) Vertreter: Hagemann, Heinrich, Dr.rer.nat., Dipl.-Chem.

(56) Entgegenhaltungen:
- EP-A- 0 357 257
- DE-A- 1 435 678
- DE-A- 2 504 534

## Beschreibung

Die vorliegende Erfindung betrifft Faserstreifen, und zwar insbesondere Filtertowstreifen, die aus vernetzten Filamenten bestehen, ein Verfahren zum Herstellen dieser Faserstreifen und eine zugehörige Vorrichtung zum Durchführen dieses Verfahrens.

Unter einem Filtertowstreifen ist ein Faserstreifen zu verstehen, der aus vernetzten Filamenten bzw. Fasern aufgebaut ist. Die Filamente des Filtertowstreifens bestehen zum Beispiel aus Celluloseacetat. Der Filtertowstreifen wird mittels einer sogenannten Kräuselmaschine gekräuselt und anschließend in einem Ballen zusammengepreßt, um für die weitere Verarbeitung zu zigarettenfiltern für stabförmige Rauchartikel bereitzustehen. Die Gesamtherstellung vom Ausgangsprodukt Cellulose bis zum im Ballen abgepackten Filtertowstreifen ist z.B. aus "Die Herstellung von Rhodia Filter Tow" Technische Information 1-01, Rhone-Poulenc Rhodia AG, Freiburg, Januar 1993 bekannt. Die bekannten Filtertowstreifen weisen eine gleichmäßige Vernetzung der Filamente über die gesamte Breite des Filtertowstreifens auf und haben über ihre Länge gesehen ein im wesentlichen gleichbleibendes Gewicht.

Ein Verfahren zum Kräuseln thermolplastischer Fäden ist in der DE-A-1 435 678 beschrieben. Ein weiteres Verfahren sowie eine Vorrichtung zum Kräuseln textiler Fasern geht aus der EP-A-0 357 257 Al hervor. Diese bekannte Lehre zielt insbesondere darauf ab, die Zahl der Kräuselungen pro Längeneinheit der Faser zu erhöhen. Im Gegensatz hierzu wird in der DE-A-2 504 534 ein Verfahren zur Herstellung gekräuselter Faserstreifen vorgestellt, bei dem die Fadenschar vor dem Kräuselvorgang in mehrere Fadenscharen aufgeteilt wird, um diese letzteren gleichzeitig, jedoch voneinander getrennt in einer Kräuselkammer zu kräuseln.

Aufgabe der vorliegenden Erfindung ist es, einen Faserstreifen, insbesondere einen Filtertowstreifen, vorzuschlagen, der bei seiner Verarbeitung zu Filtersträngen Produktivitätsvorteile bietet. Außerdem soll ein vorteilhaftes Verfahren zum Herstellen di'eses Faserstreifens, einschließlich Vorrichtung zu dessen Durchführung vorgeschlagen werden.

Diese Aufgabe wird gelöst durch einen mehrfachbreiten Faserstreifen, insbesondere einen mehrfachbreiten Filtertowstreifen, der aus gekräuselten, vernetzten Filamenten besteht, wobei die auf den Gesamttiter (dtex) bezogene Reißkraft (daN) des Faserstreifens mindestens etwa 1,7 x 10⁻⁴ daN/dtex (bestimmt in Anlehnung an DIN 53 834 T1, Februar 1976, unter einer Vorspannung von 2,4 N) beträgt, dadurch gekennzeichnet, daß der Faserstreifen mehrere in Längsrichtung des Faserstreifens verlaufende Bereiche sowie mindestens eine in Längsrichtung des Faserstreifens verlaufende Sollreißlinie aufweist.

Lösungsbestandteil dieser Aufgabe ist auch das Verfahren nach den Ansprüchen 4 bis 12 sowie die Vorrichtung nach Anspruch 13 bis 16.

Nach einer bevorzugten Ausgestaltung des erfindungsgemäßen mehrfachbreiten Faserstreifens beträgt die angesprochene auf den Gesamttiter bezogene Reißkraft mindestens etwa 2,5 x 10⁻⁴, insbesondere mindestens etwa 3,5 x 10⁻⁴ daN/dtex. Diese Werte werden in Anlehnung an die DIN-Vorschrift 53 834 T1 vom Februar 1976 bestimmt. Diese ist an sich vorgesehen zur Bestimmung entsprechender Werte für Garne und zwirne und bezieht sich auf die feinheitsbezogene Höchstzugkraft. Im Rahmen der Definition des erfindungsgemäßen mehrfachbreiten Faserstreifens wird hier stattdessen der Begriff "Reißkraft" herangezogen. Dabei erfolgt die Messung unter Anlegen einer Vorspannung von 2,5 N. Der erfindungsgemäße mehrfachbreite Faserstreifen muß demzufolge die angesprochene Reißkraft aufweisen, damit er auf den herkömmlichen Aufbereitungsteilen einer Filterstabmaschine mit einer üblichen Filamentdichteverteilung bearbeitet werden kann.

Die den erfindungsgemäßen mehrfachbreiten Faserstreifen bildenden Filamente sind gekräuselt und vernetzt. Unter "Vernetzung" ist zu verstehen, daß sich die Filamente zum Beispiel im Filtertowstreifen netzartig überkreuzen, um einen zusammenhaltenden Filtertowstreifen zu bilden. Diese netzartige Struktur läßt sich besonders gut erkennen, wenn der Filtertowstreifen ausgebreitet wird. Die Vernetzung bedeutet aber auch, daß der Filtertowstreifen nicht ohne weiteres aufgetrennt werden kann, da die Verhakung der querliegenden Filamente erst aufgelöst werden muß, was z.B. von Bedeutung sein kann, wenn der Filtertowstreifen für die weitere Verarbeitung unterteilt werden soll. Sind viele Filamente im Faserstreifen verhakt, so liegt eine starke Vernetzung der Filamente vor. Man spricht diesbezüglich von einem "großen Vernetzungsgrad". Sind dagegen nur wenige Filamente verhakt, so liegt eine relativ schwache Vernetzung vor. Man spricht von einem "geringen Vernetzungsgrad". Die bekannten Filtertowstreifen haben im wesentlichen einen über den ganzen Filtertowstreifen gleichen Vernetzungsgrad, der als normal bzw. maximal eingestuft werden kann. Der Faserstreifen gemäß der vorliegenden Erfindung kann im Unterschied zu dem bekannten Faserstreifen Bereiche aufweisen, deren Vernetzungsgrad unter dem normalen Vernetzungsgrad liegt. Im Rahmen der vorliegenden Erfindung handelt es sich bei diesem Bereich um die "Sollreißlinie". Unter der Einwirkung einer Dehnungskraft in Längsrichtung kann der erfindungsgemäße mehrfachbreite Faserstreifen, wenn gewünscht, in zwei oder mehrere Teile getrennt werden. Diese Dehnungskraft muß unterhalb der Reißkraft des Faserstreifens liegen. Bei den handelsüblichen Filtertowstreifen liegen diese maximalen, auf den Gesamttiter bezogenen Reißkraftwerte, bestimmt in Anlehnung an obige DIN-Vorschrift (Vorspannung 2,5 N), zwischen etwa 2,5 x 10⁻⁴ bis 4,5 x 10⁻⁴ daN/dtex. Dies ist abhängig von der jeweiligen Spezifikation. Um den erfindungsgemäßen mehrfachbreiten Faserstreifen aufgrund der Ausbildung der Sollreißlinie in die gewünschten Teile aufzutrennen, muß die angesprochene aufzubringende Dehnungskraft kleiner als die Reißkraft des Faserstreifens sein. Dabei wird dieser Erfolg im allgemeinen dann erreicht, wenn die Reißkraft um etwa 10%, vorzugsweise um etwa 25% und insbesondere mehr als 50% unterschritten wird.

Bei der oben angesprochenen DIN-Vorschrift erfolgt, wie bereits gesagt, eine Abwandlung dahingehend, daß bei der Bestimmung der Reißkraft eine Vorspannung von 2,5 N zur Einwirkung gebracht wird. Bei einem den Rahmen der Erfindung verlassenden Vernetzungsgrad (Tendenz gegen 0) bewirkt bereits die Vorspannung von 2,5 N eine vollständige Trennung der Bereiche des Faserstreifens. Mit anderen Worten bedeutet das, daß der minimale Vernetzungsgrad im obigen Sinne durch die Vorspannung von 2,5 N, unabhängig von der Spezifikation, festgelegt ist. Der maximale Vernetzungsgrad der Sollreißlinie und damit die für die Trennung der Bereiche des Faserstreifens notwendige Dehnungskraft orientieren sich an der spezifikationsabhängigen Reißkraft.

Die erfindungsgemäßen Filtertowstreifen entstehen aus mehreren nebeneinander angeordneten, ungekräuselten Bändern, die einer gleichzeitig stattfindenden gemeinsamen Kräuselung unterzogen werden, wobei die nachfolgend geschilderten Verfahrensmaßnahmen zur Ausbildung der Sollreißlinie zu beachten sind.

Die Sollreißlinien können gleichbreiten Bereichen des Filtertowstreifens mit normalem Vernetzungsgrad zugeordnet sein. Hierdurch ist ein sogenannter mehrfachbreiter teilbarer Filtertowstreifen gegeben, der bei der weiteren Verarbeitung an den Sollreißlinien in jeweils gleichbreite Einzelstreifen mit jeweils gleichem Gesamttiter aufgetrennt wird. Dabei ist es bevorzugt, daß die Teilung mit einer Titergenauigkeit von ± 5%, insbesondere ± 3%, bezogen auf den Gesamttiter, vorgenommen wird.

Der erfindungsgemäße Filtertowstreifen kann in einem Ballen abgepackt werden und dann bei der Herstellung von Filtersträngen zur Herstellung von Zigarettenfiltern und ähnlichen Artikeln verwendet werden, indem der mehrfachbreite Filtertowstreifen einer Filterstrangmaschine zugeführt wird, die den mehrfachbreiten Filtertowstreifen an den Solltrennlinien in einzelne einfachbreite Filtertowstreifen aufteilt, welche gleichzeitig in der Filterstrangherstellungsmaschine zu entsprechend vielen Filtersträngen verarbeitet werden. Hierbei wird insbesondere durch Einsatz einer Doppelfilterstrangmaschine mit einem Einzelaufbereitungsteil ein Vorteil erzielt. Damit lassen sich erhebliche Einsparungen bezüglich Personalaufwand und Zeiteinsatz, insbesondere beim Wechseln der Filtertowballen erreichen, wodurch die Produktitivät gesteigert wird. Außerdem haben diese durch Auftrennung des mehrfachbreiten Filtertowstreifens erzeugten einzelnen Filtertowstreifen im wesentlichen, wie vorstehend schon erwähnt, gleichen Gesamttiter und außerdem gleichen Kräuselindex, was den Ausschuß bei der Herstellung von Filtersträngen vermindert. Eine solche Doppelfilterstrangmaschine ist in der gleichzeitig mit der vorliegenden Anmeldung eingereichten Anmeldung "Verfahren und Vorrichtung zum Herstellen von Fasersträngen" beschrieben, die von der gleichen Anmelderin wie die der vorliegenden Anmeldung stammt. Auf den Inhalt dieser Anmeldung wird hier ausdrücklich Bezug genommen.

Das erfindungsgemäße Verfahren zur Herstellung des erfindungsgemäßen mehrfachbreiten Faserstreifens ist dadurch gekennzeichnet, daß mehrere voneinander getrennte Bänder aus im wesentlichen parallel zueinander sich erstreckenden Filamenten ausgebildet und die ausgebildeten Bänder schließlich gemeinsam gekräuselt werden, um einen oder mehrere gekräuselte Faserstreifen, insbesondere einen Filtertowstreifen, zu erzeugen.

Vorzugsweise werden bei der Durchführung des erfindungsgemäßen Verfahrens die ungekräuselten Bänder, kurz bevor sie gemeinsam gekräuselt werden, nicht mehr voneinander getrennt geführt. Dies bedeutet in anderen Worten, daß sich die zueinander benachbarten, ungekräuselten Bänder schließlich berühren, wonach nach dem Kräuseln eine Sollreißlinie mit dem gewünschten Vernetzungsgrad erzeugt wird. Dabei kann es im Einzelfall von Vorteil sein, daß unterschiedlich breite, ungekräuselte Bänder ausgebildet werden, die gemeinsam gekräuselt werden. Vorteilhaft kann es auch sein, daß mehrere, insbesondere zwei gleichbreite, ungekräuselte Bänder ausgebildet werden, die gemeinsam gekräuselt werden. Bevorzugt wird es dabei, daß die beiden ungekräuselten Bänder bis kurz vor dem gemeinsamen Kräuseln voneinander getrennt geführt werden, wodurch sich nach dem Kräuseln der beiden Bänder ein gekräuselter Faserstreifen ergibt, der eine mittig sich erstreckende Sollreißlinie aufweist.

Eine Weiterbildung des erfindungsgemäßen Verfahrens besteht darin, daß im Anschluß geeignete Verpackungsmaßnahmen ergriffen werden. Dabei wird es bevorzugt, daß die Sollreißlinie(n) einen derartig niedrigen Vernetzungsgrad aufweist bzw. aufweisen, daß nach Verlassen der Kräuselmaschine mehrere individuelle Faserstreifen entstehen, indem der Abstand der Trennwand zum Quets'chbereich zwischen den Transportwalzen verringert und/oder die Dicke der Trennwand vergrößert wird, daß der oder die hergestellten Faserstreifen abgelegt, gepreßt und zu einem Ballen verpackt werden, daß die mindestens zwei individuellen Faserstreifen in einem gemeinsamen, aber durch eine Trennwand abgeteilten Ablagebehälter abgelegt und nach Entfernen der Trennwand gemeinsam gepreßt und zu einem einheitlichen Ballen verpackt werden und daß die individuellen Faserstreifen in zwei gesonderten Ablagebehältern abgelegt, getrennt gepreßt und zu zwei individuellen Ballen verpackt werden. Die obigen Vorrichtungsteile werden nachfolgend noch erläutert werden.

Die erfindungsgemäße Vorrichtung zur Durchführung des erfindungsgemäßen Verfahrens kennzeichnet sich durch folgende Merkmale: eine Inenneinrichtung zur getrennten Führung der ungekräuselten Bänder, eine Transportwalzenpaar zum gemeinsamen Transportieren der zugeführten Bänder und eine Kräuseleinrichtung, die nach dem Transportwalzenpaar angeordnet ist, zum Kräuseln der das Transportwalzenpaar verlassenden Bänder.

Vorzugsweise handelt es sich bei der Trenneinrichtung um eine Trennwand vor dem Transportwalzenpaar. Mittels dieser Trenneinrichtung können die Bereiche niedrigen Vernetzungsgrades in dem gebildeten Faserstreifen erzeugt werden, d.h. die Sollreißlinie. Vorzugsweise ist die Trennwand in ihrem Abstand zum Quetschbereich des Transportwalzenpaares veränderbar und in ihrer Dicke variabel. Je geringer der Abstand der Trennwand vom Quetschbereich des Transportwalzenpaares ist, desto geringer ist der Vernetzungsgrad innerhalb der Sollreißlinie. Gleiches gilt für eine Vergrößerung der Dicke der Trennwand. Wenn die Trennwand quasi bis an den Quetschbereich heranreicht, können sich die Bänder vom Quetschbereich nicht mehr berühren, wodurch nach dem Kräuseln voneinander getrennte Faserstreifen erzeugt werden. Mit anderen Worten bedeutet das, daß der Vernetzungsgrad 0 beträgt.

Ist der Abstand der Trennwand zum Quetschbereich des Transportwalzenpaares relativ kurz, dann ergibt sich für die Sollreißlinie des erzeugten Faserstreifens ein relativ geringer Vernetzungsgrad, so daß eine Auftrennung des mehrfachbreiten Faserstreifens in z.B. einfachbreite Faserstreifen leicht erfolgen kann, aber dennoch ein ausreichender Zusammenhalt besteht. Dieser zusammenhalt ist notwendig, bis der Faserstreifen beispielsweise in die Doppelfilterstrangmaschine einläuft. Über den angesprochenen Abstand der variablen Trennwand vom Quetschbereich des Transportwalzenpaares lassen sich damit unterschiedliche Faserstreifen mit unterschiedlichen Eigenschaften, d.h. mit unterschiedlich ausgeprägten Sollreißlinien, erzeugen. Eine entsprechende Steuerung ist auch, wie bereits angesprochen, über die Dickenveränderung der Trennwand möglich.

In der erfindungsgemäßen Vorrichtung kann auch mehr als eine Trennwand angeordnet sein, wobei die Anzahl der Trennwände die Anzahl der voneinander trennbaren Bereiche des hergestellten Faserstreifens bestimmt.

Die vorliegende Erfindung ist nicht auf ein bestimmtes Material der Faserstreifen eingeschränkt. Bei ihrer praktischen Verwirklichung hat es sich gezeigt, daß die Filamente vorzugsweise aus Celluloseacetat, Polyethylenterephthalat, Polyolefinen, wie Polypropylen, oder auch Polyhydroxybuttersäureestern, Polyamiden (z.B. Nylon) und Viskose bestehen.

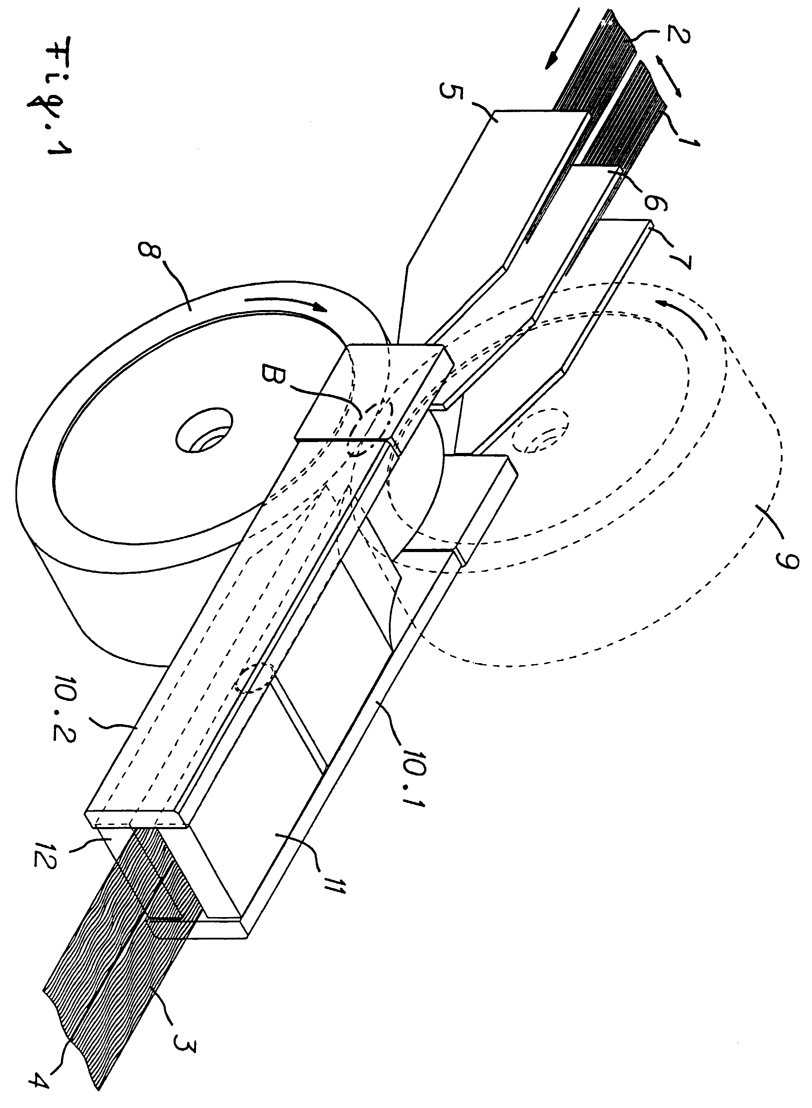

Weitere Vorteile und Anwendungsmöglichkeiten der vorliegenden Erfindung sind aus der nachfolgenden Beschreibung einer Ausführungsform der Erfindung in Verbindung mit der Figur 1 ersichtlich.

Figur 1 zeigt eine Ausführungsform einer Vorrichtung zum Herstellen eines doppelbreiten, teilbaren Faserstreifens 3 aus zwei voneinander getrennten gleichbreiten Bändern 1 und 2 in denen Filamente aus Celluloseacetat, im wesentlichen nebeneinander angeordnet sind, wobei diese Bänder nachfolgend als ungekräuselte Bänder 1 und 2 bezeichnet werden. Die Vorrichtung nach Figur 1 wird auch als Kräuselmaschine bezeichnet.

Die Kräuselmaschine weist zwei übereinander angeordnete und gelagerte Transportwalzen 8 und 9 auf, die sich um ihre Walzenachsen in Richtung der eingetragenen Pfeile aufeinander zudrehen. Vor den beiden angetriebenen Walzen 8 und 9 sind zwei parallel zueinander angeordnete Führungsbleche 5 und 7 angeordnet, die die ungekräuselten Bänder 1 und 2 seitlich führen. Zwischen den ungekräuselten Bändern 1 und 2 ist in einem Bereich vor dem Walzenpaar mit den Walzen 8 und 9 ein wandförmiges Trennblech 6 als Trenneinrichtung bzw. Teilereinrichtung angeordnet, das bzw. die die beiden ungekräuselten Bänder 1 und 2 sicher voneinander trennt, bevor sie in den Einzugsbereich der Walzen 8 und 9 gelangen. Die Führungsbleche 5 und 7 und auch das Trennblech 6 sind in Richtung zu den Walzen hin, d.h. in der Laufrichtung der beiden ungekräuselten Bänder 2 und 1, keilförmig zulaufend, damit sie bis nahe an einen Quetschbereich B herangeführt werden können.

Die Kräuselmaschine weist weiterhin zwei Kammerwände 10.1 und 10.2 auf, die parallel zueinander angeordnet sind, um zwischen sich die Bänder 1 und 2 in Laufrichtung zu führen. Die beiden Kammerwände 10.1 und 10.2 nehmen auch ein relativ langgestrecktes Auflageteil 12 auf, auf dem der Faserstreifen 3 aufliegt. Über dem Faserstreifen 3 ist zwischen den Kammerwänden 10.1 und 10.2 und unter einem Winkel von 90° zu ihnen eine bewegliche Klappe 11 angeordnet. Die angesprochenen Teile 10.1, 10.2, 11 und 12 bewirken in üblicher Weise die Kräuselung nach dem Stauchkammerprinzip. Die beiden ungekräuselten Bänder 1 und 2 werden durch die Transportwalzen 8 und 9 in den Stauchkammerteil transportiert.

Durch eine mehrfache Auslegung des Trennblechs 6 und einer dimensionsmäßigen Anpassung der Walzen 8 und 9 und der anderen Teile der Kräuselmaschine, kann die im Rahmen der Erfindung eingesetzte Kräuselmaschine einfach modifiziert werden, um z.B. auch dreifachbreite, vierfachbreite oder fünffachbreite Filtertowstreifen mit entsprechend vielen Sollreißlinien zu erzeugen.

Gemäß einer weiteren Modifikation zur Ausführungsform nach Figur 1 kann z.B. der Abstand des Trennblechs 6 zu dem Führungsblech 7 und dem Führungsblech 5 hin unterschiedlich sein, wodurch unterschiedlich breite, bezüglich ihres Gesamttiters ungleiche, ungekräuselte Bänder der Kräuselung zugeführt werden, um einen Filtertowstreifen mit unterschiedlich breiten Towhälften zu erzeugen.

Das Trennblech 6 kann gemäß einer weiteren Modifikation einstellbar ausgelegt sein, so daß sich der Abstand zwischen dem in Richtung der Walzen 9 und 8 gesehenen Ende des Trennblechs 6 und dem Quetschbereich B der beiden Walzen 8 und 9 einstellen bzw. variieren läßt. Das Trennblech 6 kann auch schwenkbar angeordnet sein.

## Patentansprüche

1. Mehrfachbreiter Faserstreifen, insbesondere mehrfachbreiter Filtertowstreifen (3), der aus gekräuselten, vernetzten Filamenten besteht, wobei die auf den Gesamttiter (dtex) bezogene Reißkraft (daN) des Faserstreifens mindestens etwa 1,7 x 10⁻⁴ daN/dtex (bestimmt in Anlehnung an DIN 53 834 T1, Februar 1976, unter einer Vorspannung von 2,5 N) beträgt, dadurch gekennzeichnet, daß der Faserstreifen mehrere in Längsrichtung des Faserstreifens verlaufende Bereiche sowie mindestens eine in Längsrichtung des Faserstreifens verlaufende Sollreißlinie (4) aufweist.

2. Faserstreifen nach Anspruch 1, dadurch gekennzeichnet, daß die Reißkraft mindestens etwa 2,5 x 10⁻⁴ daN/dtex, insbesondere mindestens etwa 3,5 x 10⁻⁴ daN/dtex, beträgt.

3. Faserstreifen nach Anspruch 1 oder 2, dadurch gekennzeichnet, daß die durch die Sollreißlinie(n) getrennten Bereiche des Faserstreifens einen gleichen oder ungleichen Gesamttiter aufweisen.

4. Verfahren zum Herstellen eines oder mehrerer Faserstreifen, insbesondere gemäß einem der vorhergehenden Ansprüche 1 bis 3, bei dem mehrere voneinander getrennte Bänder (1,2) aus im wesentlichen parallel zueinander sich erstreckenden Filamenten ausgebildet werden, dadurch gekennzeichnet, daß die ausgebildeten Bänder schließlich gemeinsam gekräuselt werden, um einen oder mehrere gekräuselte Faserstreifen, insbesondere einen Filtertowstreifen (3), zu erzeugen.

5. Verfahren nach Anspruch 4, dadurch gekennzeichnet, daß die ungekräußelten Bänder (1,2), kurz bevor sie gemeinsam gekräuselt werden, nicht mehr voneinander getrennt geführt werden.

6. Verfahren nach einem der Ansprüche 4 oder 5, dadurch gekennzeichnet, daß unterschiedlich breite, ungekräuselte Bänder ausgebildet werden, die gemeinsam gekräuselt werden.

7. Verfahren nach einem der Ansprüche 4 bis 6, dadurch gekennzeichnet, daß mehrere, insbesondere zwei gleichbreite, ungekräuselte Bänder (1,2) ausgebildet werden, die gemeinsam gekräuselt werden.

8. Verfahren nach Anspruch 5 oder 7, dadurch gekennzeichnet, daß zwei gleichbreite, ungekräuselte Bänder (1,2) ausgebildet werden und daß die beiden ungekräuselten Bänder bis kurz vor dem gemeinsamen Kräuseln voneinander getrennt geführt werden, wodurch sich nach dem Kräuseln der beiden Bänder ein gekräuselter Faserstreifen ergibt, der eine sich mittig erstreckende Sollreißlinie (4) aufweist.

9. Verfahren nach mindestens einem der Ansprüche 4 bis 8, dadurch gekennzeichnet, daß die Sollreißlinie(n) einen derartig niedrigen Vernetzungsgrad aufweist bzw. aufweisen, daß nach Verlassen der Kräuselmaschine mehrere individuelle Faserstreifen entstehen, indem der Abstand der Trennwand (6) zum Quetschbereich (B) zwischen den Transportwalzen (8, 9) verringert und/oder die Dicke der Trennwand (6) vergrößert wird.

10. Verfahren nach einem der Ansprüche 4 bis 8, dadurch gekennzeichnet, daß der oder die hergestellten Faserstreifen abgelegt, gepreßt und zu einem Ballen verpackt werden.

11. Verfahren nach Anspruch 9, dadurch gekennzeichnet, daß die mindestens zwei individuellen Faserstreifen in einem gemeinsamen, aber durch eine Trennwand abgeteilten Ablagebehälter abgelegt und nach Entfernen der Trennwand gemeinsam gepreßt und zu einem einheitlichen Ballen verpackt werden.

12. Verfahren nach Anspruch 9, dadurch gekennzeichnet, daß die individuellen Faserstreifen in zwei gesonderten Ablagebehältern abgelegt, getrennt gepreßt und zu zwei individuellen Ballen verpackt werden.

13. Vorrichtung zur Durchführung des Verfahrens nach mindestens einem der Ansprüche 4 bis 12, die eine Kräuseleinrichtung (10.1, 10.2, 11, 12) sowie eine Trenneinrichtung (6) zur getrennten Führung der ungekräuselten Bänder (1,2) aufweist, dadurch gekennzeichnet, daß die Vorrichtung außerdem ein Transportwalzenpaar (8,9) zum gemeinsamen Transportieren der zugeführten Bänder (1,2) aufweist, das nach der Trenneinrichtung und vor der Kräuseleinrichtung angeordnet ist.

14. Vorrichtung nach Anspruch 13, dadurch gekennzeichnet, daß die Trenneinrichtung (6) eine Trennwand ist.

15. Vorrichtung nach Anspruch 14, dadurch gekennzeichnet, daß die Trennwand (6) in ihrem Abstand zur Quetschlinie (B) des Transportwalzenpaares (8,9) sowie in ihrer Dicke veränderbar ist.

## Claims

1. Multiple-width fibre strip, especially multiple-width filter tow strip (3), consisting of crimped, netted filaments, the breaking strength (daN) of the fibre strip relative to its total linear density (dtex) being at least about 1.7 x 10⁻⁴ daN/dtex (determined on the lines of DIN 53: 834 P1, February 1976, using a pre-tension of 2.5 N), characterized in that the fibre strip comprises a plurality of regions extending in the longitudinal direction of the fibre strip and also at least one predetermined breaking line (4) extending in the longitudinal direction of the fibre strip.

2. Fibre strip according to Claim 1, characterized in that the breaking strength is at least about 2.5 x 10⁻⁴ daN/dtex, especially at least about 3.5 x 10⁻⁴ daN/dtex.

3. Fibre strip according to Claim 1 or 2, characterized in that the regions of the fibre strip which are separated by the predetermined breaking line(s) have equal or unequal total linear densities.

4. Process for producing one or more fibre strips, especially as set forth in any of the preceding Claims 1 to 3, by forming a plurality of mutually separated bands (1, 2) from filaments which extend in an essentially parallel arrangement, characterized in that the bands formed are finally jointly crimped to produce one or more crimped fibre strips, especially a filter tow strip (3).

5. Process according to Claim 4, characterized in that the uncrimped bands (1, 2) are guided in a mutually separated state only until shortly before they are jointly crimped.

6. Process according to either of Claims 4 and 5, characterized in that uncrimped bands are formed in different widths for joint crimping.

7. Process according to any of Claims 4 to 6, characterized in that a plurality of, especially two, uncrimped bands (1, 2) are formed in equal widths for joint crimping.

8. Process according to Claim 5 or 7, characterized in that two uncrimped bands (1, 2) are formed in equal widths and in that the two uncrimped bands are guided in a mutually separated atate until shortly before the joint crimping, which produces, after the crimping of the two bands, a crimped fibre strip having a centrally extending pre-determined breaking line (4).

9. Process according to at least one of Claims 4 to 8, characterized in that the or each predetermined breaking line has such a low degree of netting that, upon exit from the crimping machine, there are formed a plurality of individual fibre strips when the distance between the separating wall (6) and the nip region (B) between the transport rolls (8, 9) is reduced and/or the thickness of the separating wall (6) is increased.

10. Process according to any of Claims 4 to 8, characterized in that the or each fibre strip produced is laid down, pressed and packed to form a bale.

11. Process according to Claim 9, characterized in that the at least two individual fibre strips are laid down in a common laydown box which is partitioned by a separating wall and, after removal of the separating wall, are jointly pressed and packed to form a unitary bale.

12. Process according to Claim 9, characterized in that the individual fibre strips are laid down in two separate laydown boxes, separately pressed and packed to form two individual bales.

13. Apparatus for carrying out the process of at least one of Claims 4 to 12, comprising a crimping means (10.1, 10.2, 11, 12) and a separating means (6) for separate guidance of the uncrimped bands (1, 2), characterized in that the apparatus further comprises a pair of transport rolls (8, 9) for jointly transporting the supplied bands (1, 2) which is situated downstream of the separating means and upstream of the crimping means.

14. Apparatus according to Claim 13, characterized in that the separating means (6) is a separating wall.

15. Apparatus according to Claim 14, characterized in that the separating wall (6) is adjustable in its distance to the nip line (B) of the pair of transport rolls (8, 9) and in its thickness.

## Revendications

1. Bande fibreuse de largeur multiple, en particulier bande de filasse pour filtre (3) de largeur multiple, qui se compose de filaments ondulés, réticulés, la résistance à la rupture (daN)rapportée au titre global (dtex) de la bande fibreuse s'élevant au moins à environ 1,7 x 10⁻⁴ daN/dtex ( déterminée en se basant sur DIN 53 834 T1, Février 1976, sous une précontrainte de 2,5N ), caractérisée par le fait que la bande fibreuse présente plusieurs zones s'étendant suivant la direction longitudinale de la bande fibreuse ainsi qu'au moins une ligne de déchirure prescrite (4) suivant la direction longitudinale de la bande fibreuse.

2. Bande fibreuse selon la revendication 1, caractérisée par le fait que la résistance à la rupture s'élève au moins à environ 2,5 x 10⁻⁴ daN/dtex, en particulier au moins à environ 3,5 x 10⁻⁴ daN/dtex.

3. Bande fibreuse selon la revendication 1 ou 2, caractérisée par le fait que les zones séparées par la (les) ligne(s) de déchirure prescrite(s) de la bande fibreuse présentent un titre global identique ou différent.

4. Procédé pour la fabrication d'une ou plusieurs bandes fibreuses, en particulier selon l'une des revendications précédentes 1 à 3, dans lequel plusieurs bandes (1,2) séparées les unes des autres sont formées à partir de filaments s'étendant pour l'essentiel parallèlement les uns aux autres, caractérisé par le fait que les bandes formées sont finalement ondulées ensemble, pour produire une ou plusieurs bandes fibreuses ondulées, en particulier une bande de filasse pour filtre (3).

5. Procédé selon la revendication 4, caractérisé par le fait que les bandes (1,2) non ondulées sont guidées en n'étant plus séparées l'une de l'autre peu avant d'être ondulées ensemble.

6. Procédé selon l'une des revendications 4 ou 5, caractérisé par le fait que sont formées des bandes non ondulées de largeurs différentes, qui sont ondulées ensemble.

7. Procédé selon l'une des revendications 4 à 6, caractérisé par le fait que plusieurs, en particulier deux, bandes (1,2) non ondulées de même largeur sont formées, qui sont ondulées ensemble.

8. Procédé selon la revendication 5 ou 7, caractérisé par le fait que deux bandes (1,2) non ondulées, de même largeur, sont formées et que les deux bandes non ondulées sont guidées séparées l'une de l'autre jusque peu avant la mise en ondulation commune, grâce à quoi, après la mise en ondulation des deux bandes, une bande fibreuse ondulée qui présente une ligne de déchirure prescrite (4) centrale est obtenue.

9. Procédé selon au moins l'une des revendications 4 à 8, caractérisé par le fait que la (les) ligne(s) de déchirure prescrite(s) présente(nt) un degré de réticulation peu élevé tel qu'après sortie de la machine à créer les ondulations plusieurs bandes fibreuses individuelles se produisent, alors que la distance de la paroi séparatrice (6) à la zone de serrage (B) entre les rouleaux de transport (8,9) diminue et/ou que l'épaisseur de la paroi séparatrice (6) augmente.

10. Procédé selon l'une des revendications 4 à 8, caractérisé par le fait que la ou les bande(s) fibreuse(s) fabriquée(s) est (sont) déposée(s) en plis, comprimée(s) et empaquetée(s) en balle.

11. Procédé selon la revendication 9, caractérisé par le fait que les bandes fibreuses individuelles au nombre de deux au moins sont déposées en plis dans un récipient de dépose commun, mais compartimenté par une paroi séparatrice et, après enlèvement de la paroi séparatrice, sont comprimées ensemble et empaquetées en une balle homogène.

12. Procédé selon la revendication 9, caractérisé par le fait que les bandes fibreuses individuelles sont déposées en plis dans deux récipients de dépose séparés, comprimées séparément et empaquetées en deux balles individuelles.

13. Dispositif pour la mise en oeuvre du procédé selon au moins l'une des revendications 4 à 12, qui comporte un appareillage pour réaliser des ondulations (10,1,10,2,11,12) ainsi qu'un dispositif séparateur (6) pour le guidage séparé des bandes (1,2) non ondulées, caractérisé par le fait que le dispositif comporte en plus une paire de rouleaux de transport (8,9) pour le transport commun des bandes (1,2) amenées, rouleaux qui sont installés après le dispositif séparateur et avant l'appareillage pour réaliser des ondulations.

14. Dispositif selon la revendication 13, caractérisé par le fait que le dispositif séparateur est une paroi de séparation (6).

15. Dispositif selon la revendication 14, caractérisé par le fait que la distance de la paroi de séparation (6) à la ligne de serrage (B) de la paire de rouleaux de transport (8,9) ainsi que l'épaisseur de cette paroi sont réglables.
